# EUROPÄISCHE PATENTANMELDUNG

(11) **EP 1 382 928 A2**
(43) Veröffentlichungstag der Anmeldung: **21.01.2004**
(21) Anmeldenummer: 03077229.7
(22) Anmeldetag: 15.07.2003
(51) Int. Cl.: F28F 5/02, B32B 31/00

(54) **Beheizbare Rolle, insbesondere für Laminatoren**

(30) Priorität: 15.07.2002 DE 10232076
(71) Anmelder: Lewandowski, Andreas, 78244 Gottmadingen (DE)
(72) Erfinder: Lewandowski, Andreas, 78244 Gottmadingen (DE)

(57) **Zusammenfassung**

Eine beheizbare Rolle (1), insbesondere für Laminatoren, verfügt über einen Kern 4, eine Beschichtung 2 und über mindestens ein Heizelement 3. Das Heizelement 3 ist außerhalb oder auf der Oberfläche des Kerns 4 angebracht und steht im direktem Kontakt mit der vorzugsweise gummiartigen Beschichtung 2. Der Kern 4 ist bevorzugterweise aus einem Material mit einer geringen Wärmeleitfähigkeit. Durch diese Anordnung der Bauteile wird die zur Erwärmung des Laminats benötigten Energie minimiert und dadurch die Zeit für das Abkühlen des Systems erheblich verkürzt.

## Beschreibung

Die Erfindung betrifft eine beheizbare Rolle, insbesondere für Laminatoren.

Aus dem Stand der Technik sind beheizbare Rollen für Laminatoren bekannt.
Die Rollen dienen zum einen dem Erhitzen des Laminats. Das Laminat besteht aus zwei Folienschichten und einem dazwischengelegten zu laminierendem Medium. Beim Heißlaminieren bestehen die Folienschichten aus einer PE-Folie, die mit dem Kunststoff EVA beschichtet ist. Durch die beheizte Rolle wird beim Erwärmen der Folienschicht zunächst das EVA bei circa 80°C geschmolzen. Die Temperatur der beheizten Rolle liegt entsprechend der Dicke der Folienschichten in einem Bereich von 80°C bis 115°C. Da die PE-Folie erst bei circa 120°C schmilzt, wird durch diesen Temperaturbereich die PE-Folie nicht verflüssigt. Das geschmolzene EVA verbindet die äußere PE-Folie mit dem zu laminierenden Medium.
Die zweite Aufgabe der beheizten Rolle ist das Verpressen der einzelnen Schichten des Laminats. Um diese Aufgabe erfüllen zu können sind Laminierrollen mit einer bevorzugterweise gummiartigen Außenschicht überzogen.
Zuletzt werden die beheizten Rollen für den Transport des Laminats in der Maschine eingesetzt.

Das Erwärmen der Rollen wird konstruktiv auf unterschiedlichste Art und Weise gelöst. Grundsätzlich unterscheidet man zwischen innenbeheizten und außenbeheizten Rollen. Bei außenbeheizten Rollen wird die Außenhülle der Laminierrolle durch Wärmestrahlung einer um die Rolle angeordneten Wärmequelle erwärmt. Zwischen Wärmequelle und Rolle ist ein Luftspalt angeordnet, um ein Reiben der beiden Oberflächen zu verhindern. Der Nachteil dieser Technologie liegt in der schlechten Regelbarkeit der Rollenoberflächentemperatur und der isolierenden Wirkung des Luftspalts. Bei innenbeheizten Rollen sind im Rolleninneren Heizelemente angebracht. Auch hier werden unterschiedlichste Technologien zur Beheizung der Rolleninnenseite verwendet. Jedoch ist auch bei dieser konstruktiven Lösung die Regelbarkeit der Oberflächentemperatur der Rolle nachteilig auf Grund mehrer Wärmeübergänge zwischen Heizelement, Rolle und Außenschicht beeinflusst. Entscheidender Nachteil beider Technologien ist die im System gespeicherte Wärmeenergie. Es werden mehre Bauteile benötigt um die Außenschicht der Rolle zu erwärmen. Alle diese Bauteile müssen gute wärmeleitende Eigenschaften haben und speichern daher auch Wärmeenergie im System. Diese gespeicherte Wärmeenergie macht es notwendig, dass beim Abkühlen des Systems die Laminierrollen weiter rotieren müssen, um ein Verformen, in der Art von Abflachungen, der Gummibeschichtung zu vermeiden.

Ausgehend von diesem Stand der Technik liegt der Erfindung somit die Aufgabe zugrunde, eine beheizbare Rolle anzugeben, mit der die Regelbarkeit der Außentemperatur der Laminierrolle zur Verbesserung der Qualität des Laminierergebnisses erleichtert wird und die Abkühlphase durch eine Reduzierung der Anzahl der Bauteile und der Wärmeleitfähigkeit der nicht zu erwärmenden Teile zu verkürzen und somit den Kundennutzen entscheidend zu verbessern.

Diese Aufgabe wird dadurch gelöst, daß die bevorzugterweise gummiartige Außenschicht der Rollen für Laminatoren direkt beheizt wird.

Gemäß einer bevorzugten Ausgestaltung der Erfindung besteht die Rolle aus einem Kern mit einer geringen Wärmeleitfähigkeit und einer direktbeheizten gummiartigen Außenhülle. In die Aussenhülle sind Heizelemente eingebracht die somit im direkten Kontakt mit der Gummierung stehen.

Somit wird erfindungsgemäß eine beheizbare Rolle, insbesondere für Laminatoren angegeben, die bevorzugterweise aus einem Kunststoffkern und einer durch Heizdrähte direktbeheizten Aussenschicht besteht. Dieser Aufbau der Rolle macht eine verkürzte Abkühlphase möglich und reduziert somit die notwendige Zeitspanne für den Nachlauf der Rollen zur Vermeidung von abgeflachten Stellen auf ein Minimum.

Weitere vorteilhafte Ausführungsformen sind in den Unteransprüchen gekennzeichnet.

Die erfindungsgemäße Heizung wird nun anhand von bevorzugten Ausführungsbeispiele mit Hilfe der beigefügten Zeichnungen näher erläutert. Es zeigen:
- Fig. 1: eine perspektivische Ansicht mit der Beschichtung im Teilschnitt einer Laminatorrolle mit einer Heizspirale,
- Fig. 2: eine perspektivische Ansicht mit der Beschichtung im Teilschnitt einer Laminatorenrolle mit zwei spiralförmigen Heizdrähten
- Fig. 3: eine perspektivische Ansicht mit der Beschichtung im Teilschnitt einer Laminatorenrolle mit wellenförmigen axialen Heizdrähten,
- Fig. 4: eine perspektivische Explosionsansichtansicht mit der Beschichtung im Teilschnitt einer Laminatorenrolle mit keramischen Heizelementen, und
- Fig. 5: eine Seitenansicht einer Laminatorrolle mit einer balligen Gummierung.

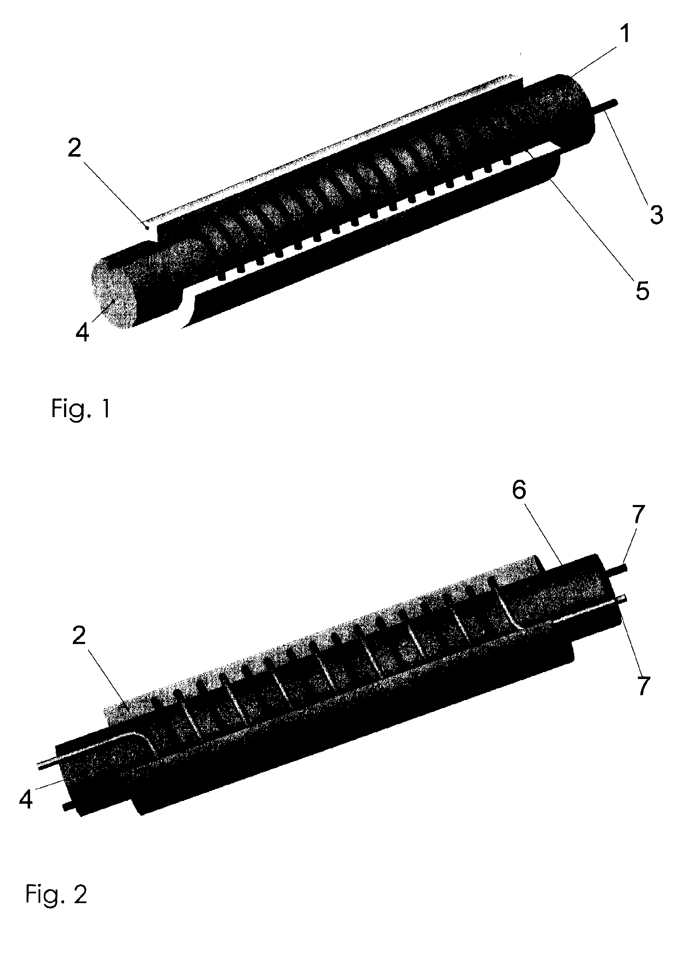

Die Fig. 1 zeigt eine perspektivische Ansicht mit der Beschichtung 2 im Teilschnitt einer Laminatorrolle 1 mit einer Heizspirale 3. Auf einem Kern 4 wird zunächst eine Heizspirale 3 aufgebracht. Diese Heizspirale 3 hat in diesem Ausführungsbeispiel einen Abstand zur Oberfläche des Kerns 4. Der Kern 4 ist vorzugsweise aus einem Material mit einer geringen Wärmeleitfähigkeit. Kern 4 und Heizspirale 3 sind vorzugsweise mit einer gummiartigen Beschichtung 2 überzogen. Wird die Heizspirale 3 von einem elektrischen Strom durchflossen, wird sie auf Grund des Wiederstandes des Drahtes erwärmt. Die Heizspirale 3 gibt diese Wärmeenergie an die gummiartige Beschichtung 2 ab und erwärmt diese. An der Außenseite der Beschichtung 2 wird die Wärme beim Laminieren an das Laminat abgegeben. Auf der Innenseite wird Wärmeenergie an den Kern 4 abgegeben. Durch die geringe Wärmeleitfähigkeit des Materials und auf Grund des schlechten Wärmeübergangs an der Bauteilgrenze 5 erwärmt sich der Kern 4 nur sehr langsam. Er speichert daher nur eine geringe Wärmemenge. Die erzeugte Wärmeenergie ist somit fast ausschließlich in der Gummierung 2 gespeichert. Beim Abkühlen des Systems muss daher nur der äußeren Schicht 2 die Wärme entzogen werden, was die Abkühlzeit entscheidend verkürzt.

Die Fig. 2 zeigt eine perspektivische Ansicht mit der Beschichtung 2 im Teilschnitt einer Laminatorenrolle 6 mit zwei spiralförmigen Heizdrähten 7. Die Laminatorrolle 6 ist wie die obige Rolle 1 aufgebaut. Der Unterschied liegt in den Heizspiralen 7. Durch die Verwendung mehrer Heizspiralen 7 wird die Regelbarkeit des Systems beim Aufheizen und bei Erreichen und Halten der Betriebstemperatur erleichtert. Beim Aufheizen der Gummierung 2 auf Betriebstemperatur wird eine größere Wärmemenge benötigt als beim Laminierprozeß. Beim Aufheizen werden daher beide Heizspiralen 7 mit einem elektrischen Strom durchflossen. Während des Laminierprozesses wird eine der beiden Heizrollen
7 abgeschaltet. Um den zusätzliche Betriebszustand "Standby" besser regeln zu können, kann eine zusätzliche Heizspirale 7 eingesetzt werden. Die Heizspiralen 7 haben ein größere Steigung der Wicklung als die Heizspirale 3 der Heizrolle 1.

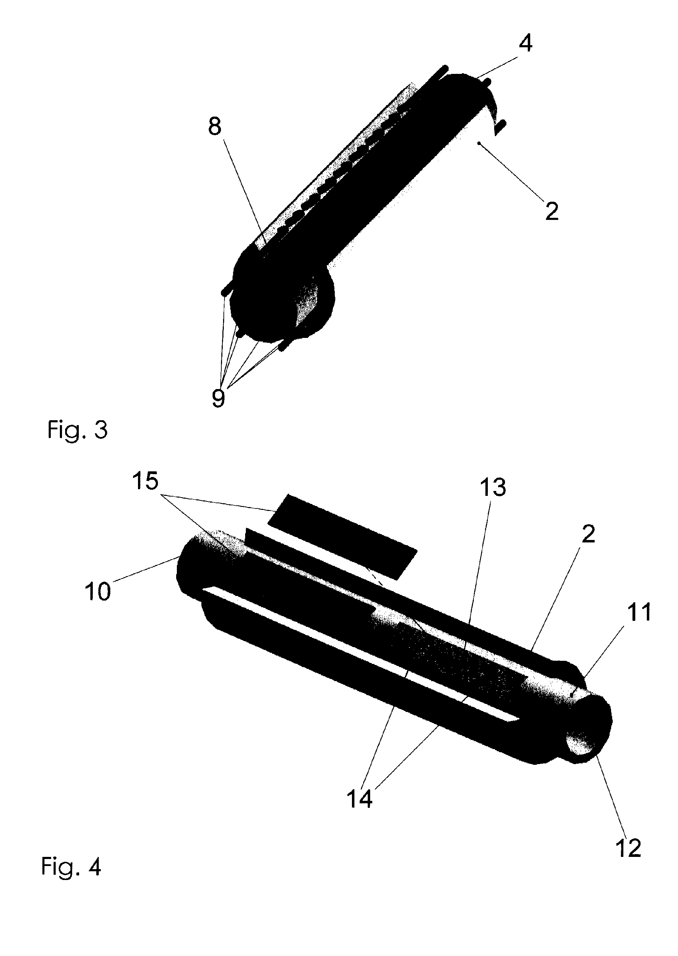

Die Fig. 3 zeigt eine perspektivische Ansicht mit der Beschichtung 2 im Teilschnitt einer Laminatorenrolle 8 mit wellenförmigen axialen Heizdrähten 9. Der Aufbau der Heizrolle 8 ist ähnlich der beiden vorrangegangenen Ausführungsbeispielen. Bei diesem bevorzugten Beispiel sind die Heizspiralen 3 oder 7 durch axiale Heizwendel 9 ersetzt. Dieses Ausführungsbeispiel bietet den Vorteil die Oberflächentemperatur am Umfang zu variieren. Beim Laminieren wird nur während der Berührung zwischen der Heizrolle und des Laminats die Betriebstemperatur benötigt. Durch die Anordnung der Heizwendel 9 nahe der Oberfläche ist ein sehr schnelles erreichen dieser Betriebstemperatur möglich. Um die eingebrachte Wärmemenge weiterhin reduzieren zu können und somit die Abkühlzeit weiter zu verkürzen, werden die einzelnen Heizwendel 9 nur kurze Zeit vor der Berührung des jeweiligem Oberflächenabschnitts im Bereich des einzelnen Heizwendel 9 mit dem Laminat eingeschaltet. Durch dieses Heizsystem lässt sich ebenso eine erhebliche Reduzierung des Gesamtenergieverbrauchs realisieren.

Die Fig. 4 zeigt eine perspektivische Explosionsansichtansicht mit der Beschichtung 2 im Teilschnitt einer Laminatorenrolle 10 mit keramischen Heizelementen 15. Dieses Ausführungsbeispiel zeigt das unterschiedlichste Heiztechnologien verwendet werden können. Anstatt der Drahtwiderstandheizungen der vorrangegangenen Beispiele werden hier keramische Dickschichtheizelemente 15 eingesetzt. Der grundsätzliche Aufbau der Rolle 10 bestehend aus Kern 11, Beschichtung 2 und Heizelemente 15 ist gleich wie bei den Beispielen 1 bis 3. Keramische Dickschichtheizelemente benötigen jedoch eine ebene Auflage zur Montage. Der Kern 11 ist daher mit Abflachungen 13 versehen auf denen die Heizelemente 15 angebracht sind. Zur Kontaktierung der Heizelemente 15 sind die Abflachungen 13 mit Durchbrüchen 14 versehen. Durch diese Durchbrüche 14 werden Kabel in die Kernbohrung 12 geführt. Am Umfang des Kern 11 sind mehrere Heizelementpaare gleichmäßig verteilt. Bei der Verwendung getrennter Heizelement in axialer und radialer Richtung, wie im Falle der Heizrolle 10 können zum einen die Heizelemente 15 nur während der Dauer des Kontakts des entsprechenden Abschnitts der Rollenoberfläche mit dem Laminat eingeschaltet werden zum anderen kann auch eine Hälfte der Rolle bei schmalen Laminaten vollständig abgeschaltete werden.

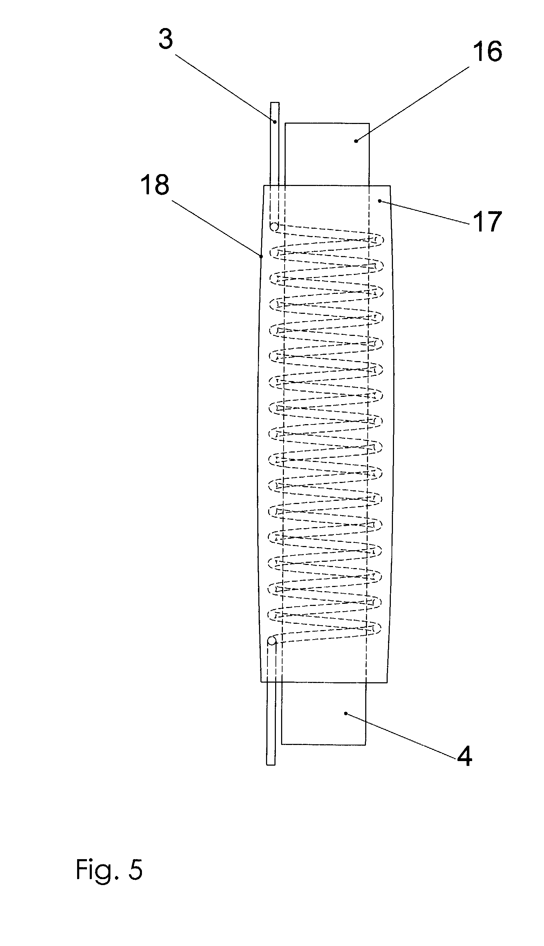

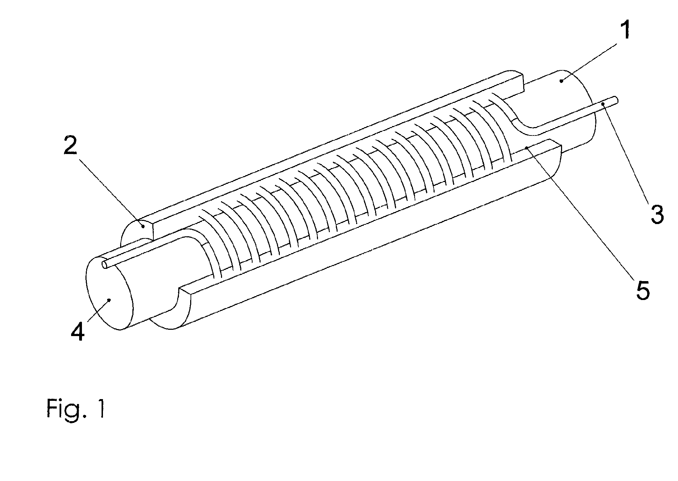

Die Fig. 5 zeigt schließlich eine Seitenansicht einer Laminatorrolle 16 mit einer balligen Gummierung 17. Der Aufbau dieser Heizrolle 16 ist gleich der Heizrolle 1. Der Unterschied liegt in der gewölbt geformten Außenfläche der Beschichtung 17. Beim Laminieren werden die Heizrollen 16 zusammengepresst. Dies kann beim Durchlaufen des Laminats zu einer Biegung des Kern 4 führen. Zum Ausgleich ist die Beschichtung 17 ballig geformt. Die Balligkeit der Rolle wird durch den Radius der Kannte 18 bestimmt.

## Patentansprüche

1. Eine beheizbare Laminatorrolle 1 mindestens bestehend aus einem Kern 4, einer Außenschicht 2 und einem oder mehreren beliebigen Heizelementen oder Heizschichten 3, **dadurch gekennzeichnet, dass** die Aussenschicht 2 direkten Kontakt mit einem oder mehreren beliebigen Heizelementen oder Heizschichten 3 hat, welche außerhalb oder auf der Oberfläche des Kerns 4 angebracht ist oder sind.

2. Eine Laminatorheizrolle nach Anspruch 1, **dadurch gekennzeichnet, dass** die Heizelemente oder Heizschichten als Heizdrähte ausgeführt sind.

3. Eine Laminatorrolle nach Anspruch 2, **dadurch gekennzeichnet, dass** die Heizdrähte 3 spiralförmig um den Kern 4 geführt sind.

4. Eine Laminatorrolle nach Anspruch 2, **dadurch gekennzeichnet, dass** eine Vielzahl von Heizdrähten 7 spiralförmig um den Kern 4 geführt sind.

5. Eine Laminatorrolle nach Anspruch 2, **dadurch gekennzeichnet, dass** eine Vielzahl von Heizdrähten 9 in axialer Richtung des Kerns 4 angebracht sind.

6. Eine Laminatorrolle nach Anspruch 1, **dadurch gekennzeichnet, dass** die Heizelemente oder Heizschichten 15 als keramische Dickschichtheizelement ausgeführt sind.

7. Eine Laminatorrolle nach Anspruch 7, **dadurch gekennzeichnet, dass** der Kern 11 Abflachungen 13 für den Einbau der Heizelemente 15 hat.

8. Eine Laminatorrolle nach einem der vorangegangenen Ansprüche, **dadurch gekennzeichnet, dass** der Kern 11 eine Bohrung in axialer Richtung und eine Vielzahl von Bohrungen in radialer Richtung zur Durchführung von Kabeln hat.

9. Eine Laminatorrolle nach einem der vorangegangenen Ansprüche, **dadurch gekennzeichnet, dass** der Kern aus einem schlecht wärmeleitenden Material besteht.

10. Eine Laminatorrolle nach einem der vorangegangenen Ansprüche, **dadurch gekennzeichnet, dass** die Beschichtung 17 eine ballige Oberfläche hat.
